# EUROPÄISCHE PATENTSCHRIFT

(11) **EP 3 887 098 B1**
(45) Veröffentlichungstag und Bekanntmachung des Hinweises auf die Patenterteilung: **04.05.2022**
(21) Anmeldenummer: 19813733.3
(22) Anmeldetag: 18.11.2019
(51) Int. Cl.: B25J 9/00, B25J 19/00, B64B 1/58, B64C 39/02

(54) **ROBOTERANORDNUNG MIT EINEM AUFTRIEBSKÖRPER ZUR BEFÜLLUNG MIT EINEM GAS LEICHTER ALS LUFT**
ROBOT ARRANGEMENT HAVING BUOYANCY BODY FOR FILLING WITH A GAS LIGHTER THAN AIR
ENSEMBLE ROBOTIQUE DOTÉ D'UN CORPS DE SUSTENTATION À REMPLIR D'UN GAZ PLUS LÉGER QUE L'AIR

(30) Priorität: 26.11.2018 DE 102018129751
(43) Veröffentlichungstag der Anmeldung: 06.10.2021
(73) Patentinhaber: Karguth, Andreas, 99869 Tüttleben (DE); Modes, Henrik, 08056 Zwickau (DE)
(72) Erfinder: Karguth, Andreas, 99869 Tüttleben (DE); Modes, Henrik, 08056 Zwickau (DE)
(74) Vertreter: Engel, Christoph Klaus
(86) Internationale Anmeldenummer: PCT/EP2019/081626
(87) Internationale Veröffentlichungsnummer: WO 2020/109050

(56) Entgegenhaltungen:
- DE-A1-102009 053 514
- JP-A- H0 524 584
- Stéphane Itasse: "Roboterballon erleichtert Arbeit in großer Höhe", MM MaschinenMarkt, 2. Juni 2014 (2014-06-02), XP55663748, Vogel Communications Group Gefunden im Internet: URL:https://www.maschinenmarkt.vogel.de/ro boterballon-erleichtert-arbeit-in-grosser- hoehe-a-448030/ [gefunden am 2020-01-30]

## Beschreibung

Die vorliegende Erfindung betrifft eine Roboteranordnung mit einem Auftriebskörper, welcher zur Befüllung mit einem Gas leichter als Luft vorgesehen ist.

Gemäß dem Stand der Technik werden bei der Ausführung von Installations-, Instandsetzungs-, Reinigungs- oder Inspektionsaufgaben an Bauwerken oder anderen Objekten in großen Höhen Fachkräfte mit technischen Hilfsmitteln an den Einsatzort gebracht. Bei diesen technischen Hilfsmitteln handelt es sich insbesondere um Hubbühnen, Kransysteme, Gerüste und Seilsysteme. Es gibt jedoch Einsatzorte, wo diese technischen Hilfsmittel aus unterschiedlichen Gründen, wie begrenzte Zugangsbereiche oder Bodenbelastungen, nicht zum Einsatz kommen können.

Die Drohnentechnologie gemäß dem Stand der Technik ist nur für einfache visuelle Inspektionen geeignet, was für eine Bauwerksprüfung nicht ausreichend ist. Ein Nachteil der Drohnentechnologie ist die negative Umweltbeeinflussung durch die propeller- oder düsenbasierte Schubkrafterzeugung.

Aus dem Stand der Technik sind Plattformen mit Auftriebskörpern bekannt, die leichter als Luft sind. Ein Nachteil dieser Plattformen besteht darin, dass mit der durch den Menschen und die notwendigen Werkzeuge bedingten großen Masse auch ein großes Volumen des Auftriebskörpers verbunden ist. Entsprechend ist ein großes Volumen des Auftriebsgases erforderlich, wodurch hohe Kosten entstehen. Die Größe des Auftriebskörpers schränkt den Anwendungsbereich ein. Ein weiterer Nachteil besteht darin, dass an das zum Einsatz kommende Personal spezielle Anforderungen gestellt werden müssen; u. a. hinsichtlich Höhentauglichkeit, Gesundheit, Fitness, Qualifikation und Körpergewicht. Oft können die Tätigkeiten in der Höhe nur in bestimmten Zeitfenstern realisiert werden. Durch die hohe psychische und physische Belastung ist die Einsatzzeit vor Ort begrenzt.

Das Produkt "Roboterballon" des Herstellers Aerobotics besteht aus einem Ballon, welcher leichter als Luft ist und an welchem eine funkgesteuerte Kamera montiert ist. Dieses Produkt soll bautechnische Arbeiten oder dokumentarische Aufnahmen ermöglichen. Die Kamera wird durch einen leichten Roboterarm gehalten, der auch mit Werkzeugen ausgestattet werden kann.

Die DE 10 2008 002 924 A1 und die EP 2 141 114 A1 zeigen eine Vorrichtung zur Arbeit in großen Höhen. Die Vorrichtung umfasst eine Arbeitspositionierung, die von einem mit einem Gas leichter als Luft gefüllten Auftriebskörper getragen wird. Der Auftriebskörper trägt mindestens eine für eine Arbeitskraft und/oder technische Ausrüstung nutzbare Arbeitspositionierung, welche auch im Bereich oberhalb des Schwerpunktes auf der Oberfläche des Auftriebskörpers einsetzbar ist. Der Auftriebskörper ist im Raum in der x-, y- und z-Achse frei positionierbar und in seiner Neigung durch die Anwendung eines Mittels zur Erzeugung einer den Gleichgewichtszustand beeinflussenden Gegenkraft kontrollierbar und in einer stabilen Lage fixierbar.

Aus der EP 1 110 679 A1 ist ein beweglicher Roboter mit zwei Armen bekannt, welche auf einer Plattform angeordnet sind.

Die EP 2 003 057 A2 zeigt ein unbemanntes Luftfahrzeug mit einem Manipulatorarm.

Die US 2015/0352727 A1 zeigt einen Manipulator mit mehreren Armen, welche durch ein Zwischenelement rotierbar zueinander verbunden sind.

Die JP H11-157497 A lehrt ein Raumfahrzeug mit einem Haltearm und mit einem Arbeitsarm.

Aus der DE 102 10 542 A1 ist ein als traggasgefüllter Ballon eingesetzter fernsteuerbarer Kameraträger bekannt. Im Bereich des Äquators des Ballons sind eine Kamera und auf der Gegenseite ein Rotationsantrieb zum Nicken und Rotationsantriebe zum Gieren an der Hülle angeordnet.

Die DE 10 2016 006 625 A1 zeigt eine Vorrichtung zur Arbeit in großer Höhe unter Einsatz eines Auftriebskörper, welcher leichter als Luft ist. Die Vorrichtung soll durch Neigung an potenzieller Energie gewinnen und damit einen stabilen Gleichgewichtszustand erreichen. Der Auftriebskörper ist bevorzugt durch ein druckfestes Element in Form einer Stange versteift, wenn sich am Boden ein Zugseil befindet und der Auftriebskörper eine hinreichend große Kraftwirkung aufweist. Hierdurch wird der durch einen Ballon gebildete Auftriebskörper sehr groß.

Die DE 10 2017 129 101 A1 zeigt eine Roboteranordnung, welche zur Handhabung und/oder Manipulation eines oder mehrerer Objekte dient, die sich in einer größeren Höhe über dem Erdboden befinden. Die Roboteranordnung umfasst einen Auftriebskörper zur Befüllung mit einem Gas leichter als Luft und ein Mittel zur Erzeugung einer den Gleichgewichtszustand des Auftriebskörpers beeinflussenden Gegenkraft. Die Roboteranordnung umfasst weiterhin eine am Auftriebskörper befestigte Plattform, welche mindestens zwei Roboterarme trägt.

Die DE 10 2010 051 373 A1 lehrt ein Kombination aus einem Luftfahrzeug und einem Ausleger, Kran oder Greifarm, mit welcher Reichweiteneinschränkungen von vertikal, unterhalb eines Luftfahrzeuges agierenden Systemen überwunden werden sollen.

Die DE 10 2009 053 514 B4 zeigt ein bodengestütztes schwebendes Hebesystem für geringe Massen, welches eine luftgestützte Transporteinrichtung mit einem wegstehenden Ausleger umfasst. Mit einer bodengestützten Lenkeinrichtung, welche eine Mehrzahl von Steuerleinen aufweist, kann die luftgestützte Transporteinrichtung vertikal positioniert und/oder orientiert werden. Die bodengestützte Lenkeinrichtung umfasst ein Lenkgestell oder einen Lenkrahmen, von welchem die Steuerleinen zur luftgestützten Transporteinrichtung verlaufen.

Die JP H05 24584 A beschreibt ein ferngesteuertes Luftschiff mit einem Luftschiffkörper und einem Antrieb. Weiterhin sind an der Vorderseite einer Gondel zwei Roboterarme befestigt. Für die Manövrierung sind vier leistungsstarke Triebwerke erforderlich, die zu einem hohen Gesamtgewicht führen.

ITASSE, Stephane beschreibt in "Roboterballon erleichtert Arbeit in großer Höhe", MM MaschinenMarkt, 2. Juni 2014, Vogel Communications Group, einen Roboterballon, an dessen Oberfläche mit Seilen ein Roboterarm befestigt ist. Der Ballon besitzt ein sehr großes Volumen. Die Antriebe des Arms sind direkt an dessen Gelenken angeordnet.

Aus der CN 203 108 029 U ist ein unbemannter Hubschrauber zum automatischen Erkennen und Behandeln eines Feuers in einer U-Bahn bekannt. Der Hubschrauber umfasst einen Körper, Flügel, eine Infrarotkamera, einen mechanischen Arm, einen Temperatursensor, eine Steuerplatine, ein drahtloses Datenübertragungsmodul und ein Gyroskop. Der mechanische Arm ist an einem Zweigflügel des Flügels angeordnet und ist durch eine mechanische Befestigungsklammer befestigt.

Die Aufgabe der vorliegenden Erfindung besteht ausgehend vom Stand der Technik darin, eine Roboteranordnung mit einem Auftriebskörper zur Befüllung mit einem Gas leichter als Luft für die Ausführung von Installations-, Instandsetzungs-, Reinigungs- oder Inspektionsaufgaben an Bauwerken oder anderen Objekten in großen Höhen zur Verfügung zu stellen, wobei die Roboteranordnung eine möglichst geringe Masse haben soll, damit der Auftriebskörper nicht sehr groß sein muss.

Die genannte Aufgabe wird gelöst durch eine Roboteranordnung gemäß dem beigefügten Anspruch 1.

Die erfindungsgemäße Roboteranordnung dient zur Handhabung und/oder Manipulation eines oder mehrerer Objekte, die sich in einer größeren Höhe über dem Erdboden befinden und ansonsten nur aufwändig über eine mit dem Erdboden verbundene Konstruktion zu erreichen sind.

Die Roboteranordnung umfasst mindestens einen Auftriebskörper zur Befüllung mit einem Gas, welches leichter als Luft ist. Somit ist die Roboteranordnung als freies oder gefesseltes Luftschiff ausgebildet, welches über dem Erdboden in der Luft schweben kann.

Die Roboteranordnung umfasst bevorzugt weiterhin mindestens ein Mittel zur Erzeugung einer den Gleichgewichtszustand des Auftriebskörpers beeinflussenden Gegenkraft. Durch dieses Mittel kann der Auftriebskörper zu einer bestimmten Position bewegt werden und/oder in dieser Position verharren.

Die Roboteranordnung umfasst weiterhin mindestens zwei durch den Auftriebskörper hindurch verlaufende Stabilisierungsstangen. Die Stabilisierungsstangen weisen jeweils ein erstes Ende und ein zweites Ende auf. Zwischen den ersten Enden und den zweite Enden befindet sich der Auftriebskörper. Die bevorzugt hohl ausgebildeten Stabilisierungsstangen sind bevorzugt druckfest ausgebildet, um einem Überdruck im Auftriebskörper standzuhalten. Bei einer einfachen Ausführungsform durchstoßen die Stabilisierungsstangen eine Hülle des Auftriebskörpers jeweils zwei Mal an jeweils einem Durchstoßpunkt, wobei die Stabilisierungsstangen an den Durchstoßpunkten bevorzugt jeweils mit einer Dichtung gegenüber der Hülle des Auftriebskörpers abgedichtet sind, sodass kein Gas aus dem Inneren des Auftriebskörpers an den Durchstoßpunkten nach außen gelangen kann. Bei einer bevorzugten Ausführungsform weist eine Hülle des Auftriebskörpers zwei schlauchartige Durchführungen auf, in denen die Stabilisierungsstangen durch den Auftriebskörper hindurchgeführt sind. Somit sind die Stabilisierungsstangen nicht dem im Auftriebskörper befindlichen Medium ausgesetzt.

An den ersten Enden der Stabilisierungsstangen ist jeweils ein Roboterarm befestigt, sodass die Roboteranordnung mindestens zwei der Roboterarme umfasst. Mithilfe der Roboterarme kann ein Objekt gehandhabt und/oder manipuliert werden, wobei einer oder mehrere der Roboterarme dazu genutzt werden können, die Position des Auftriebskörpers mit den Roboterarmen zu fixieren, sodass einer oder mehrere der Roboterarme das Mittel zur Erzeugung einer den Gleichgewichtszustand des Auftriebskörpers beeinflussenden Gegenkraft bilden können. Grundsätzlich umfasst die Roboteranordnung aber mindestens zwei der Roboterarme, die zur Handhabung und/oder Manipulation eines oder mehrerer Objekte ausgebildet sind.

An den zweiten Enden der Stabilisierungsstangen ist jeweils ein Antrieb für den jeweiligen Roboterarm angebracht. Somit befindet sich der Auftriebskörper zwischen den Roboterarmen und den deren Antrieben. Die Antriebe sind dazu ausgebildet, eine oder mehrere von Einzelbewegungen der Roboterarme zu bewirken. Es müssen aber nicht sämtliche der Einzelbewegungen der Roboterarme durch die Antriebe an den zweiten Enden der Stabilisierungsstangen bewirkbar sein.

Ein besonderer Vorteil der erfindungsgemäßen Roboteranordnung besteht darin, dass durch die Verteilung der Masse der Roboterarme und der Masse der Antriebe beiderseitig des Auftriebskörpers eine stabile Ausrichtung der schwebenden Roboteranordnung erzielt wird, ohne dafür eine zusätzliche Masse zu benötigen. Die massearm ausführbaren Stabilisierungsstreben verbinden die Roboterarme und die Antriebe und bewirken gleichzeitig eine Versteifung des Auftriebskörpers.

Ein besonderer Vorteil der erfindungsgemäßen Roboteranordnung besteht darin, dass die Roboterarme mit den Stabilisierungsstangen und den Antrieben als räumlich ausgedehnte Anordnung mit einer kleinen Masse aber mit einem großen Massenträgheitsmoment ausführbar sind. Diese Anordnung ist mit dem Auftriebskörper derart vereint, dass die wirkenden Roboterarme an einer Oberseite der Roboteranordnung angeordnet sind und die Roboteranordnung in einer Gleichgewichtslage bleibt. Das große Massenträgheitsmoment bewirkt eine zumindest partielle Kompensation von mechanischen Störeinflüssen. Die Positionierung in Raum und eine weitere Kompensation von mechanischen Störeinflüssen, wie Momentenstörungen können mit dem bevorzugt vorhandenen Mittel zur Erzeugung einer den Gleichgewichtszustand des Auftriebskörpers beeinflussenden Gegenkraft erfolgen. Der Auftriebskörper dient der Gewichtskraftkompensation beim mobilen Einsatz.

Ein weiterer Vorteil der erfindungsgemäßen Roboteranordnung besteht darin, dass der Auftriebskörper keinen Mensch heben können muss, sodass er entsprechend klein ausgeführt werden kann, und dass die beiden Roboterarme den Menschen für viele Aufgaben ersetzen können. Da die erfindungsgemäße Roboteranordnung unbemannt betrieben werden kann, weist sie den Vorteil auf, dass deutlich geringere Sicherheits- und Schutzaufwendungen als bei einem Einsatz von Menschen erforderlich sind. Zudem sind längere Arbeitszyklen und Arbeitszeitverlagerungen möglich. Es ist eine Automatisierung und eine Objektivierung von Teilprozessen durch sensorische Kontrollen möglich, wodurch eine gleichmäßig hohe Qualität und eine Dokumentierbarkeit gewährleistet wird. Da der Auftriebskörper klein ausgeführt werden kann, ergibt sich ein breites Einsatzspektrums der Roboteranordnung.

Bevorzugte Ausführungsformen der erfindungsgemäßen Roboteranordnung umfassen weiterhin Kraft- und/oder Momentübertragungsmittel, die jeweils von den Antrieben an oder in der jeweiligen Stabilisierungsstange zu dem jeweiligen Roboterarm geführt sind. Durch die Kraft- und/oder Momentübertragungsmittel können Kräfte bzw. Momente von dem jeweiligen Antrieb auf den jeweiligen Roboterarm übertragen werden, sodass dieser aktuiert werden kann. Bevorzugt sind mindestens drei der Kraft- und/oder Momentübertragungsmittel von jedem der beiden Antriebe zu dem jeweiligen Roboterarm geführt, sodass drei verschiedene Bewegungen an jedem der Roboterarme ausgeführt werden können. Entsprechend umfassen die Antriebe bevorzugt jeweils mindestens drei Einzelantriebe zur Erzeugung jeweils einer Kraft oder eines Momentes.

Die ersten Enden und die zweiten Enden der Stabilisierungsstangen befinden sich bevorzugt jeweils außerhalb des Auftriebskörpers, sodass die Stabilisierungsstangen beiderseitig aus dem Auftriebskörper herausragen.

Die Stabilisierungsstangen sind bevorzugt gerade. Die Stabilisierungsstangen weisen an ihren zweiten Enden einen Abstand auf, welcher bevorzugt größer als ein Abstand zwischen den ersten Enden ist. Somit sind die Stabilisierungsstangen V-förmig zueinander ausgerichtet, wodurch die Massenträgheit in eine weitere Richtung erhöht ist. Die Stabilisierungsstangen sind bevorzugt gemeinsam in einer Ebene angeordnet, welche bevorzugt auch einen Mittelpunkt des Auftriebskörpers umfasst. Die Stabilisierungsstangen weisen bevorzugt einen gleichen Abstand zum Mittelpunkt des Auftriebskörpers auf.

Befindet sich die Roboteranordnung in einem schwebenden Zustand, in welchem der Auftriebskörper in Richtung des Auftriebes ausgerichtet ist, so verlaufen die Stabilisierungsstangen bevorzugt schräg durch den Auftriebskörper, wobei die ersten Enden der Stabilisierungsstangen höher als die zweiten Enden der Stabilisierungsstangen angeordnet sind. In diesem Zustand weisen die ersten Enden der Stabilisierungsstangen bevorzugt eine gleiche Höhe auf. In diesem Zustand weisen die zweiten Enden der Stabilisierungsstangen bevorzugt eine gleiche Höhe auf. In diesem Zustand weisen die Stabilisierungsstangen einen Winkel gegenüber einer Horizontalen auf, welcher bevorzugt zwischen 30° und 60°, besonders bevorzugt zwischen 40° und 50° beträgt. In dem genannten Zustand befinden sich die Roboterarme bevorzugt oberhalb eines Horizontes des Auftriebskörpers.

Bei bevorzugten Ausführungsformen der erfindungsgemäßen Roboteranordnung sind die Stabilisierungsstangen gleich lang ausgeführt. Die Stabilisierungsstangen an ihren ersten Enden bevorzugt über eine Querstrebe miteinander verbunden, sodass die Ausrichtung der Stabilisierungsstangen zueinander stabilisiert ist. Die Querstrebe umfasst bevorzugt ein Gelenk, durch welches zwei Teilabschnitte der Querstrebe schwenkbar zueinander sind, wodurch der Abstand zwischen den ersten Enden der Stabilisierungsstangen veränderbar ist.

Bei bevorzugten Ausführungsformen der erfindungsgemäßen Roboteranordnung sind die Antriebe jeweils durch einen elektromotorischen Antrieb gebildet. Die elektromotorischen Antriebe umfassen bevorzugt jeweils mindestens drei elektromotorische Einzelantriebe für den jeweiligen Roboterarm. Die elektromotorischen Einzelantriebe umfassen bevorzugt jeweils einen Elektromotor und ein Getriebe.

Bei bevorzugten Ausführungsformen der erfindungsgemäßen Roboteranordnung sind die Roboterarme gleich ausgebildet. Bei bevorzugten Ausführungsformen der erfindungsgemäßen Roboteranordnung sind die Antriebe gleich ausgebildet.

Die Roboterarme umfassen bevorzugt jeweils einen Schulterarmteil, einen vom Schulterarmteil getragenen Oberarmteil, einen vom Oberarmteil getragenen Unterarmteil und einen vom Unterarmteil getragenen Handwurzelarmteil. Die genannten Armteile sind bevorzugt zueinander schwenkbar, sodass die Roboterarme jeweils mindestens vier Freiheitsgrade, aber bevorzugt fünf Freiheitsgrade besitzen.

Der Schulterarm, der Oberarmteil, der Unterarmteil und/oder der Handwurzelarmteil eines jeden der beiden Roboterarme sind bevorzugt durch den jeweiligen Antrieb schwenkbar bzw. drehbar, wobei einzelne diese Schwenk- bzw. Drehbewegungen auch durch an dem jeweiligen Roboterarm angeordnete weitere Antriebe antreibbar sein können.

Bei bevorzugten Ausführungsformen der erfindungsgemäßen Roboteranordnung sind die Schulterarmteile jeweils drehbar auf der jeweiligen Stabilisierungsstange angeordnet. Die Schulterarmteile sind bevorzugt jeweils drehbar auf dem ersten Ende der jeweiligen Stabilisierungsstange angeordnet. Diese Drehbarkeit ist bevorzugt in einer vertikalen Drehachse gegeben.

Die Roboterarme umfassen bevorzugt jeweils einen von einem ersten der Kraft- oder Momentübertragungsmittel antreibbaren ersten rotativen Aktuator, der auf dem ersten Ende der jeweiligen Stabilisierungsstange angeordnet ist und mit dem jeweiligen Schulterarmteil verbunden ist. Somit können die Schulterarmteile durch ein Beaufschlagen der ersten Kraft- oder Momentübertragungsmittel gegenüber den ersten Enden der Stabilisierungsstangen gedreht werden. Somit sind die Schulterarmteile jeweils mit dem jeweiligen ersten rotativen Aktuator auf dem ersten Ende der jeweiligen Stabilisierungsstange angeordnet.

Die ersten rotativen Aktuatoren umfassen bevorzugt jeweils eine Riemenscheibe, auf welcher ein Riemen geführt ist, welcher an seinen Enden mit antagonistisch wirkenden Seilzügen des ersten Kraftübertragungsmittels verbunden ist. Somit sind die ersten Kraftübertragungsmittel jeweils durch die antagonistisch wirkenden Seilzüge gebildet. Die Riemenscheiben sind bevorzugt durch Zahnriemenscheiben gebildet und die Riemen sind bevorzugt durch Zahnriemen gebildet.

Die ersten Kraftübertragungsmittel sind bevorzugt jeweils durch einen ersten der Einzelantriebe der Antriebe an den zweiten Enden der Stabilisierungsstangen antreibbar, der bevorzugt durch einen rotativen Einzelantrieb gebildet ist. Entsprechend wird das Drehen der Schulterarmteile gegenüber den ersten Enden der Stabilisierungsstangen durch die Antriebe an den zweiten Enden der Stabilisierungsstangen bewirkt.

Bei bevorzugten Ausführungsformen der erfindungsgemäßen Roboteranordnung sind die Oberarmteile jeweils schwenkbar am jeweiligen Schulterarmteil angebracht. Diese Schwenkbarkeit ist bevorzugt in einer horizontalen Schwenkachse gegeben. Hierfür umfassen die Roboterarme bevorzugt jeweils einen ersten Linearaktuator, wobei ein erstes Ende des jeweiligen ersten Linearaktuators mit dem jeweiligen Schulterarmteil verbunden ist, und wobei ein zweites Ende des jeweiligen ersten Linearaktuators mit dem jeweiligen Oberarmteil verbunden ist. Somit sind die ersten Linearaktuatoren jeweils dem jeweiligen Roboterarm integriert. Die beiden ersten Linearaktuatoren sind bevorzugt jeweils durch einen ersten Spindelantrieb antreibbar bzw. durch diesen ersten Spindelantrieb gebildet. Somit befinden sich die ersten Linearaktuatoren bzw. die ersten Spindelantriebe auf derjenigen Seite des Auftriebskörpers, auf welcher auch die ersten Enden der Führungsstangen angeordnet sind.

Bei bevorzugten Ausführungsformen der erfindungsgemäßen Roboteranordnung sind die Unterarmteile jeweils schwenkbar am jeweiligen Oberarmteil angebracht. Diese Schwenkbarkeit ist bevorzugt in einer horizontalen Schwenkachse gegeben. Hierfür umfassen die Roboterarme bevorzugt jeweils einen zweiten Linearaktuator, wobei ein erstes Ende des jeweiligen zweiten Linearaktuators mit dem jeweiligen Oberarmteil verbunden ist, und wobei ein zweites Ende des jeweiligen zweiten Linearaktuators mit dem jeweiligen Unterarmteil verbunden ist. Somit sind die zweiten Linearaktuatoren jeweils dem jeweiligen Roboterarm integriert. Die beiden zweiten Linearaktuatoren sind bevorzugt jeweils durch einen zweiten Spindelantrieb antreibbar bzw. durch diesen zweiten Spindelantrieb gebildet. Somit befinden sich die zweiten Linearaktuatoren bzw. die zweiten Spindelantriebe auf derjenigen Seite des Auftriebskörpers, auf welcher auch die ersten Enden der Führungsstangen angeordnet sind.

Bei bevorzugten Ausführungsformen der erfindungsgemäßen Roboteranordnung sind die Handwurzelarmteile jeweils schwenkbar um eine erste Schwenkachse am jeweiligen Unterarmteil angebracht. Hierfür umfassen die Roboterarme bevorzugt jeweils einen von einem zweiten der Kraft- oder Momentübertragungsmittel antreibbaren zweiten rotativen Aktuator, der an dem jeweiligen Unterarmteil angeordnet ist und mit dem jeweiligen Handwurzelarmteil verbunden ist. Somit können die Handwurzelarmteile durch ein Beaufschlagen der zweiten Kraft- oder Momentübertragungsmittel gegenüber den Unterarmteilen geschwenkt werden.

Die zweiten Kraftübertragungsmittel umfassen bevorzugt jeweils einen ersten Bowdenzug bzw. sind durch diesen gebildet. Die zweiten rotativen Aktuatoren sind jeweils mit dem ersten Bowdenzug des zweiten Kraftübertragungsmittels verbunden. Die zweiten rotativen Aktuatoren umfassen bevorzugt jeweils eine erste Rückstellfeder, durch welche einer Bewegung des jeweiligen ersten Bowdenzuges entgegengewirkt wird.

Die zweiten Kraftübertragungsmittel sind jeweils durch einen zweiten der Einzelantriebe antreibbar, welcher bevorzugt durch einen ersten Linearantrieb gebildet ist. Die ersten Linearantriebe sind bevorzugt jeweils durch einen dritten Spindelantrieb gebildet. Die zweiten Einzelantriebe sind Komponenten der Antriebe, die an den zweiten Enden der Stabilisierungsstangen angeordnet sind.

Bei bevorzugten Ausführungsformen der erfindungsgemäßen Roboteranordnung sind die Handwurzelarmteile jeweils schwenkbar auch um eine zu der ersten Schwenkachse senkrechten zweiten Schwenkachse am jeweiligen Unterarmteil angebracht. Hierfür umfassen die Roboterarme bevorzugt jeweils einen von einem dritten der Kraft- oder Momentübertragungsmittel antreibbaren dritten rotativen Aktuator, der an dem jeweiligen Unterarmteil angeordnet ist und mit dem jeweiligen Handwurzelarmteil verbunden ist. Somit können die Handwurzelarmteile auch durch ein Beaufschlagen der dritten Kraft- oder Momentübertragungsmittel gegenüber den Unterarmteilen geschwenkt werden.

Die dritten Kraftübertragungsmittel umfassen bevorzugt jeweils einen zweiten Bowdenzug bzw. sind durch diesen gebildet. Die dritten rotativen Aktuatoren sind jeweils mit dem zweiten Bowdenzug des dritten Kraftübertragungsmittels verbunden. Die dritten rotativen Aktuatoren umfassen bevorzugt jeweils eine zweite Rückstellfeder, durch welche einer Bewegung des jeweiligen zweiten Bowdenzuges entgegengewirkt wird.

Die dritten Kraftübertragungsmittel sind jeweils durch einen dritten der Einzelantriebe antreibbar, welcher bevorzugt durch einen zweiten Linearantrieb gebildet ist. Die zweiten Linearantriebe sind bevorzugt jeweils durch einen vierten Spindelantrieb gebildet. Die dritten Einzelantriebe sind Komponenten der Antriebe, die an den zweiten Enden der Stabilisierungsstangen angeordnet sind.

Bei bevorzugten Ausführungsformen der erfindungsgemäßen Roboteranordnung sind die Kraftübertragungsmittel durch Seilzüge, insbesondere durch antagonistische Seilzüge oder Bowdenzüge gebildet, die an oder in den Stabilisierungsstangen verlaufen.

Die Stabilisierungsstangen, die Querstrebe, die Oberarmteile und/oder die Unterarmteile sind bevorzugt durch Rohre gebildet. Die Rohre bestehen bevorzugt aus einem Leichtmetall oder besonders bevorzugt aus einem kohlenstofffaserverstärkten Kunststoff. Besonders bevorzugt verlaufen die Kraftübertragungsmittel in Form von Seilzügen, wie antagonistischen Seilzügen oder Bowdenzügen in den durch die Rohre gebildeten Stabilisierungsstangen. Bevorzugt verlaufen auch elektrische Kabel in den durch die Rohre gebildeten Stabilisierungsstangen. Die Kabel führen beispielsweise zu den ersten und zweiten Spindelantrieben und/oder zu Sensoren.

Die Oberarmteile sind bevorzugt jeweils durch zwei der Rohre gebildet, wodurch sie sehr stabil sind.

Die Schulterarmteile sind bevorzugt jeweils gemeinsam mit der Riemenscheibe des jeweiligen zweiten rotativen Aktuators ausgebildet.

Bei bevorzugten Ausführungsformen der erfindungsgemäßen Roboteranordnung ist der Auftriebskörper durch einen Ballon gebildet. Der Auftriebskörper kann durch ein Prallluftschiff, durch ein Halbstarrluftschiff oder durch ein Starrluftschiff gebildet sein. In einer Ausführungsform als Halbstarrluftschiff oder als Starrluftschiff umfasst der Auftriebskörper bevorzugt ein Gestell, welches vor allem der Gleichgewichtsstabilisierung einer Hülle des Auftriebskörpers dient.

Der Ballon weist einen Durchmesser auf, welcher bevorzugt zwischen 2 und 5 Meter beträgt. Die Roboterarme weisen eine Reichweite auf, welche bevorzugt mindestens 1 Meter beträgt.

Der Ballon weist bevorzugt die Form einer oben abgeflachten Kugel auf. Bevorzugt ist die Kugel auch unten abgeflacht, wobei die obere Abflachung stärker ausgeprägt als die untere Abflachung ist.

Das Gas, welches leichter als Luft ist, ist bevorzugt durch Helium gebildet, wobei auch ein anderes Gas leichter als Luft oder erwärmte Luft verwendet werden kann. Der Auftriebskörper ist bevorzugt mit dem Gas, welches leichter als Luft ist, gefüllt. Der Auftriebskörper ist bevorzugt leichter als Luft. Bevorzugt ist der Auftriebskörper einschließlich der Stabilisierungsstangen, der Antriebe und der mindestens zwei Roboterarme leichter als Luft.

Bei bevorzugten Ausführungsformen der erfindungsgemäßen Roboteranordnung umfasst das Mittel zur Erzeugung einer den Gleichgewichtszustand des Auftriebskörpers beeinflussenden Gegenkraft weitere der Roboterarme, Zugseile und/oder schuberzeugende Triebwerke, welche am oder im Auftriebskörper befestigt sind. Die Roboteranordnung umfasst bevorzugt mindestens drei der Roboterarme, wobei zwei der Roboterarme zur Manipulation und/oder Handhabung dienen, während der mindestens eine weitere Roboterarm das Mittel zur Erzeugung einer den Gleichgewichtszustand des Auftriebskörpers beeinflussenden Gegenkraft bildet. Bevorzugt umfasst die Roboteranordnung vier der Roboterarme, wobei zwei der Roboterarme zur Manipulation und/oder Handhabung dienen, während die zwei weiteren Roboterarme das Mittel zur Erzeugung einer den Gleichgewichtszustand des Auftriebskörpers beeinflussenden Gegenkraft bilden. Die alternativ oder ergänzend vorhandenen Zugseile sind jeweils an einem Ende am Auftriebskörper befestigt, während die Zugseile jeweils an dem anderen Ende bevorzugt an einer am Boden befindlichen Haltevorrichtung befestigt sind. Die Haltevorrichtung umfasst bevorzugt eine Winde zum Aufwickeln des Zugseiles und/oder Gewichte. Die Haltevorrichtung ist bevorzugt auf dem Boden verfahrbar. Die alternativ oder ergänzend vorhandenen schuberzeugenden Triebwerke sind bevorzugt durch Propeller oder durch Impeller gebildet. Die Roboteranordnung umfasst bevorzugt mehrere der schuberzeugenden Triebwerke, welche in unterschiedliche Richtungen ausgerichtet sind, sodass der Auftriebskörper in unterschiedliche Richtungen getrieben werden kann.

Bei bevorzugten Ausführungsformen der erfindungsgemäßen Roboteranordnung ist an einer oder beiden der Führungsstangen ein Magazin für Werkzeuge, Greifer, Instrumente, Sonden und/oder Sensoren angeordnet. Die Werkzeuge, Greifer, Instrumente, Sonden bzw. Sensoren sind durch die Roboterarme greifbar. Somit kann die Roboteranordnung auch nach der Positionierung des Auftriebskörpers für unterschiedliche Arbeitsaufgaben konfiguriert werden. Das Magazin weist bevorzugt mehrere Behältnisbereiche für die Werkzeuge, Greifer, Instrumente, Sonden bzw. Sensoren auf.

Das Magazin weist bevorzugt weiterhin Behältnisbereiche für Objekte und/oder Proben auf, welche während eines Einsatzes der Roboteranordnung in der Höhe von der Roboteranordnung aufgenommen werden und durch eine Lagerung in dem Magazin zum Boden transportiert werden können. Die Objekte bzw. Proben sind von den Roboterarmen aufnehmbar und durch diese in die Behältnisbereiche ablegbar.

Das Magazin weist bevorzugt weiterhin mechanische Verriegelungen zum Verschließen der einzelnen Behältnisbereiche auf. Hierdurch kann gewährleistet werden, dass die Inhalte des Magazins während der Bewegungen des Auftriebskörpers nicht aus dem Magazin fallen können. Die Verriegelungen sind bevorzugt elektrisch betätigbar.

Das Magazin weist bevorzugt weiterhin Sensoren zur Messung von Zuständen des Magazins auf. Bei den Zuständen des Magazins handelt es sich insbesondere um Befüllungen der Behältnisbereiche und um Schließzustände der Verriegelungen der Behältnisbereiche. Somit kann erfasst werden, ob die Behältnisbereiche des Magazins leer oder gefüllt sind bzw. ob diese geöffnet oder verschlossen sind.

Das Magazin umfasst bevorzugt eine Magazinsignalverarbeitungseinheit, welche bevorzugt mit den Sensoren des Magazins und/oder mit den elektrisch betätigbaren Verriegelungen elektrisch verbunden ist. Die Magazinsignalverarbeitungseinheit empfängt die Signale der Sensoren. Die Magazinsignalverarbeitungseinheit steuert die elektrisch betätigbaren Verriegelungen an.

Die Roboteranordnung umfasst bevorzugt weiterhin mindestens eine zentrale Kamera, welche bevorzugt an einem der Roboterarme oder einer der Stabilisierungsstangen befestigt ist. In besonderen Ausführungen können Detailkameras zusätzlich angeordnet sein, beispielsweise an den Handwurzeln der Roboterarme. Die Kamera dient zur visuellen Erfassung der zu inspizierenden, zu manipulierenden bzw. zu handhabenden Objekte und gegebenenfalls auch der Roboterarme. Die Kamera umfasst bevorzugt ein Mikrofon, sodass auch Ton aufgenommen werden kann. Die Kameras sind vorzugsweise mit Beleuchtungseinheiten, insbesondere LED-Scheinwerfern ausgerüstet.

Bevorzugte Ausführungsformen der erfindungsgemäßen Roboteranordnung umfassen weiterhin eine vom Auftriebskörper entfernte Bedieneinheit und eine am Auftriebskörper angeordnete Steuerungselektronik. Die Bedieneinheit und die Steuerungselektronik sind über ein elektrisches Kabel und/oder über eine drahtlose Verbindung miteinander verbunden, sodass Informationen von der Bedieneinheit zur Steuerungselektronik und zurück übertragen werden können. Die Bedieneinheit ist dafür vorgesehen, am Boden genutzt zu werden. Ein Bediener kann mithilfe der Bedieneinheit die Roboteranordnung bedienen; beispielsweise die Roboterarme steuern oder Bilder der Kamera betrachten. Die Steuerungselektronik ist bevorzugt an dem zweiten Ende einer oder beider der Stabilisierungsstangen angeordnet.

Die Steuerungselektronik ist bevorzugt mit den Roboterarmen und gegebenenfalls auch mit der Kamera und gegebenenfalls mit den von den Roboterarmem verwendeten Sensoren und gegebenenfalls mit an der Führungsstangen und/oder an dem Auftriebskörper befindlichen Sensoren elektrisch verbunden. Die Sensoren umfassen bevorzugt Temperatur-, Feuchte-, Druck-, Inertial- und/oder Abstandssensoren. Die elektrische Verbindung kann drahtgebunden oder drahtlos sein. Durch die elektrische Verbindung können Daten von der Bedieneinheit über die Steuerungselektronik zu den Roboterarmen bzw. zu den Sensoren und zurück übertragen werden.

Die Steuerungselektronik ist bevorzugt auch mit der Magazinsignalverarbeitungseinheit elektrisch verbunden. Durch diese elektrische Verbindung können Daten von der Bedieneinheit über die Steuerungselektronik und weiter über die Magazinsignalverarbeitungseinheit zu den Sensoren am Magazin und/oder den elektrisch betätigbaren Verriegelungen und zurück übertragen werden.

Die Bedieneinheit umfasst bevorzugt mindestens ein haptisches Eingabegerät zum Bedienen des Auftriebskörpers und/oder der Roboterarme. Das mindestens eine haptische Eingabegerät ist bevorzugt durch einen Joystick gebildet, der bevorzugt zur Steuerung in sechs Dimensionen ausgebildet ist. Die Bedieneinheit umfasst bevorzugt mindestens zwei dieser Joysticks.

Das haptische Eingabegerät ist bevorzugt durch eine manuell steuerbare Eingabekinematik gebildet, welche die Roboterarme nachbildet, d. h. dass die manuell steuerbare Kinematik in ihrer Dimension und in ihrer Struktur der Kinematik der Roboterarme entspricht. Die haptische Eingabekinematik weist Gelenke auf, in denen sich absolute Weg- und/oder Winkelmesssysteme befinden, die in einem einfachen Fall durch Potentiometer gebildet sein können. Die Messwerte dieser Weg- bzw. Winkelmesssysteme bilden die Vorgabe für die Positionierung der jeweils zugehörigen Gelenke der Roboterarme deren tatsächlich eingenommene Position beispielsweise ebenfalls durch Potenziometer erfasst wird. Somit ist eine technisch einfache und intuitive Bewegungssteuerung der Roboterarme möglich, denn die Kinematik am Roboterarm folgt direkt der Eingabekinematik.

Die Bedieneinheit umfasst bevorzugt eine Anzeigeeinheit zum Anzeigen der mit der Kamera bzw. den Kameras aufgenommenen Bilder, sodass der Bediener am Boden diese Bilder betrachten kann, um beispielsweise eine Inspektion vorzunehmen. Die Anzeigeeinheit ist bevorzugt durch einen Bildschirm oder durch ein auf dem Kopf zu tragendes visuelles Ausgabegerät, beispielsweise in Form einer Videobrille, gebildet.

Die Kamera ist bevorzugt zur Aufnahme stereoskopischer oder dreidimensionaler Bilder ausgebildet, während die Anzeigeeinheit bevorzugt zum Anzeigen der stereoskopischen bzw. dreidimensionalen Bilder ausgebildet ist. Die Anzeigeeinheit ist bevorzugt durch eine 3D-Brille, durch eine 3D-Anzeige oder durch einen gewölbten Bildschirm gebildet.

Die Bedieneinheit umfasst bevorzugt ergänzend auch eine Anzeige zum Anzeigen von Steuerinformationen und Statusinformationen. Diese Anzeige ist bevorzugt durch einen Bildschirm gebildet. Die Bedieneinheit umfasst bevorzugt ergänzend auch einen Lautsprecher zur akustischen Ausgabe von Steuerinformationen und/oder Statusinformationen und/oder zur Wiedergabe von Aufnahmen des Mikrofons.

Bei bevorzugten Ausführungsformen der erfindungsgemäßen Roboteranordnung sind die Bedieneinheit und die Steuerungselektronik über einen Bus miteinander verbunden. Die Roboteranordnung umfasst bevorzugt zudem einen Rechner, welcher als ein Master auf dem Bus konfiguriert ist. Der Rechner ist bevorzugt durch einen Industrie-PC gebildet. Der Rechner ist bevorzugt zur Konvertierung und/oder Speicherung von Signalen der Sensoren konfiguriert. Der Rechner ist bevorzugt zur Generierung von Steuersignalen für die Roboterarme entsprechend den Eingaben an der Bedieneinheit konfiguriert. Der Rechner ist bevorzugt zur Visualisierung von Prozessdaten konfiguriert. Der Rechner umfasst bevorzugt eine Tastatur zur Eingabe von Prozessparametern und einen Monitor.

Die erfindungsgemäße Roboteranordnung umfasst bevorzugt weiterhin eine Stromversorgungseinheit zur elektrischen Versorgung der Antriebe der Roboterarme und gegebenenfalls der Steuerungselektronik. Die Stromversorgungseinheit ist bevorzugt zur Spannungswandlung ausgebildet; insbesondere zur Spannungswandlung von einer Netzspannung auf eine Spannung zum Betreiben der Roboterarme. Die Stromversorgungseinheit umfasst bevorzugt einen Elektroenergiespeicher, der bevorzugt durch einen Akkumulator gebildet ist. Mit dem Elektroenergiespeicher können Ausfälle der Netzspannung überbrückt werden. Die Stromversorgungseinheit ist bevorzugt entfernt von dem Auftriebskörper angeordnet und über ein elektrisches Kabel mit der Steuerungselektronik verbunden, sodass die Stromversorgungseinheit am Boden, beispielsweise an der Bedieneinheit angeordnet werden kann. Die Stromversorgungseinheit ist alternativ bevorzugt am Auftriebskörper angeordnet, wofür sie einen Elektroenergiespeicher umfasst, der bevorzugt durch einen Akkumulator gebildet ist. Die Stromversorgungseinheit ist dabei bevorzugt an dem zweiten Ende einer oder beider der Stabilisierungsstangen angeordnet. Diese Ausführungsform erlaubt einen fesselfreien Betrieb des Auftriebskörpers.

Die erfindungsgemäße Roboteranordnung umfasst bevorzugt vier der Roboterarme, wobei ein erstes Paar der Roboterarme zur Manipulation und/oder Handhabung von Objekten dient, während ein zweites Paar der Roboterarme zum Fixieren des Auftriebskörpers dient und somit zumindest teilweise das Mittel zur Erzeugung einer den Gleichgewichtszustand des Auftriebskörpers beeinflussenden Gegenkraft bildet. Das zweite Paar der Roboterarme ist bevorzugt unterhalb des ersten Paares der Roboterarme angeordnet.

Die Roboterarme umfassen bevorzugt jeweils eine Kamera zur optischen Erfassung von zu handhabenden bzw. zu manipulierenden Objekten. Die jeweilige Kamera ist bevorzugt an dem jeweiligen Handwurzelarmteil befestigt. Die jeweilige Kamera umfasst bevorzugt ein Mikrofon zur Erfassung akustischer Ereignisse im Bereich der zu handhabenden bzw. zu manipulierenden Objekte.

Die Roboterarme umfassen bevorzugt jeweils eine Beleuchtungseinheit zur Beleuchtung von zu handhabenden bzw. zu manipulierenden Objekten. Die jeweilige Beleuchtungseinheit ist bevorzugt an dem Handwurzelarmteil befestigt. Die jeweilige Beleuchtungseinheit ist bevorzugt durch einen LED-Scheinwerfer gebildet.

Die Roboterarme umfassen bevorzugt jeweils Kraftsensoren am jeweiligen Handwurzelarmteil. Die Kraftsensoren sind bevorzugt umfänglich um den jeweiligen Handwurzelarmteil angeordnet, sodass sie diesen axial umhüllen. Die Kraftsensoren dienen zur Messung einer von außen auf den Handwurzelarmteil wirkenden Druckkraft, sodass beispielsweise haptische Funktionen realisiert werden können. Die Kraftsensoren sind bevorzugt segmentiert.

Die Roboterarme umfassen bevorzugt jeweils eine inertiale Messeinheit, welche bevorzugt im jeweiligen Handwurzelarmteil angeordnet ist. Die inertiale Messeinheit umfasst bevorzugt drei Beschleunigungssensoren, mit denen die Beschleunigungen in die drei Raumrichtungen gemessen werden können. Die inertiale Messeinheit umfasst bevorzugt drei Gyrosensoren, mit denen die Drehbewegungen um die drei Raumrichtungen gemessen werden können.

Die Roboterarme umfassen bevorzugt jeweils ein Koppelelement zum Ankoppeln des jeweils anderen Roboterarmes. Die Koppelelemente sind bevorzugt jeweils am jeweiligen Handwurzelarmteil befestigt. Die Koppelelemente sind bevorzugt elektromechanisch ausgebildet.

Die Steuerungselektronik ist bevorzugt dazu ausgebildet, definierte Bewegungen der Armteile zu veranlassen und mithilfe der Sensoren die Bewegung des jeweiligen Roboterarmes bei möglichen Kollisionen in einen vordefinierten Bewegungszustand zu überführen. Der vordefinierte Bewegungszustand ist bevorzugt durch einen Bewegungsstopp gebildet.

Weitere Vorteile, Einzelheiten und Weiterbildungen der Erfindung ergeben sich aus der nachfolgenden Beschreibung einer bevorzugten Ausführungsform der Erfindung, unter Bezugnahme auf die Zeichnung. Es zeigen:
- Fig. 1:: eine bevorzugte Ausführungsform einer erfindungsgemäßen Roboteranordnung in einer perspektivischen Ansicht;
- Fig. 2:: zwei Roboterarme der in Fig. 1 gezeigten Roboteranordnung im Detail;
- Fig. 3:: zwei Antriebe der in Fig. 1 gezeigten Roboteranordnung im Detail; und
- Fig. 4:: zwei Führungsstangen der in Fig. 1 gezeigten Roboteranordnung.

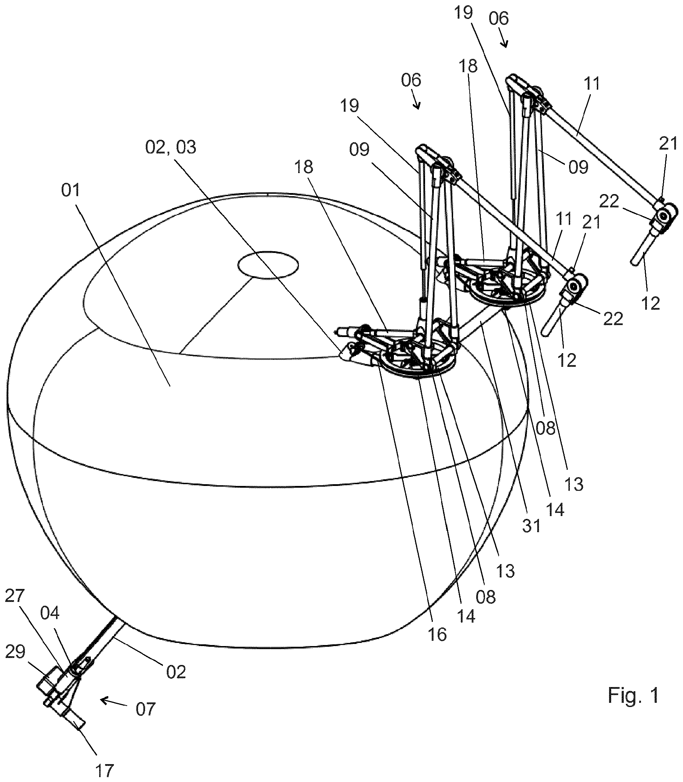

Fig. 1 zeigt eine bevorzugte Ausführungsform einer erfindungsgemäßen Roboteranordnung in einer perspektivischen Ansicht. Die Roboteranordnung umfasst einen Auftriebskörper in Form eines Ballons 01, welcher mit Helium gefüllt ist. Durch den Ballon 01 verlaufen zwei rohrförmige Stabilisierungsstangen 02, welche jeweils an einem oberen Ende 03 und an einem unteren Ende 04 aus dem Ballon 01 herausragen. An den oberen Enden 03 der beiden Stabilisierungsstangen 02 ist jeweils ein Roboterarm 06 befestigt. An den unteren Enden 04 der beiden Stabilisierungsstangen 02 ist jeweils ein Antrieb 07 zum Antreiben des jeweiligen Roboterarmes 06 befestigt.

Die Roboterarme 06 umfassen jeweils einen Schulterarmteil 08, einen vom Schulterarmteil 08 getragenen Oberarmteil 09, einen vom Oberarmteil 09 getragenen Unterarmteil 11 und einen vom Unterarmteil 11 getragenen Handwurzelarmteil 12.

Die Schulterarmteile 08 sind jeweils auf einem ersten rotativen Aktuator 13 ausgebildet, der an dem oberen Ende 03 der jeweiligen Stabilisierungsstange 02 befestigt ist. Die ersten rotativen Aktuatoren 13 umfassen jeweils eine Zahnriemenscheibe 14, auf welcher ein Zahnriemen 16 geführt ist. Die Zahnriemen 16 sind jeweils mit zwei antagonistischen Seilzügen (nicht gezeigt) verbunden, welche durch die jeweilige rohrförmige Stabilisierungsstange 02 bis zu deren unteren Ende 04 verlaufen. Die antagonistischen Seilzüge (nicht gezeigt) enden jeweils am jeweiligen Antrieb 07. Die Antriebe 07 umfassen jeweils einen rotativen Einzelantrieb 17, welcher die antagonistischen Seilzüge (nicht gezeigt) mit einer Zugkraft beaufschlagen kann.

Die Oberarmteile 09 sind jeweils um eine horizontale Achse schwenkbar am jeweiligen Schulterarmteil 08 angebracht. Die Roboterarme 06 umfassen jeweils einen ersten Spindelantrieb 18, welcher zwischen dem jeweiligen Schulterarmteil 08 und dem jeweiligen Oberarmteil 09 eingespannt ist, wodurch der jeweilige Oberarmteil 09 gegenüber dem jeweiligen Schulterarmteil 08 geschwenkt werden kann.

Die Unterarmteile 11 sind jeweils um eine horizontale Achse schwenkbar am jeweiligen Oberarmteil 09 angebracht. Die Roboterarme 06 umfassen jeweils einen zweiten Spindelantrieb 19, welcher zwischen dem jeweiligen Oberarmteil 09 und dem jeweiligen Unterarmteil 11 eingespannt ist, wodurch der jeweilige Unterarmteil 11 gegenüber dem jeweiligen Oberarmteil 09 geschwenkt werden kann.

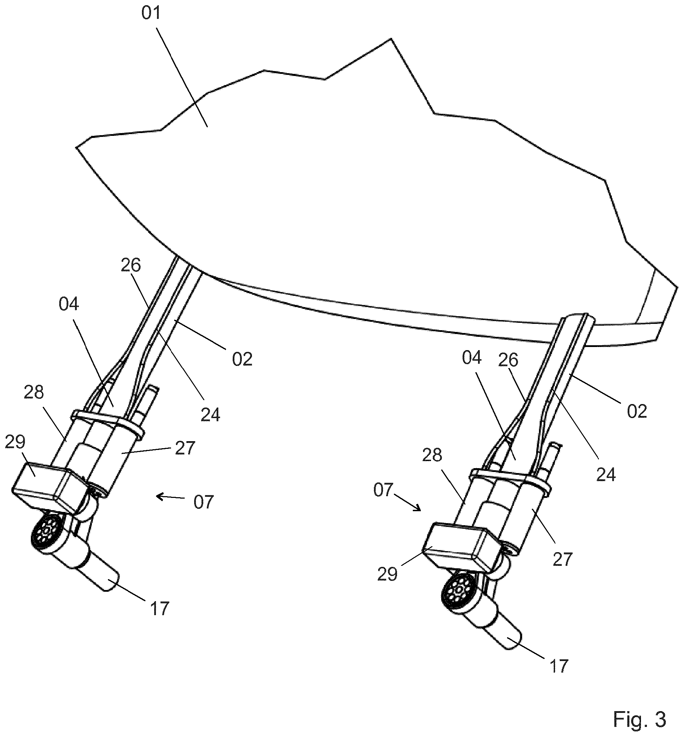

Die Handwurzelarmteile 12 sind jeweils um zwei senkrecht zueinander ausgerichtete Achsen schwenkbar am jeweiligen Unterarmteil 11 angebracht. Die Roboterarme 06 umfassen jeweils einen zweiten rotativen Aktuator 21 und einen dritten rotativen Aktuator 22. Die zweiten rotativen Aktuatoren 21 und die dritten rotativen Aktuatoren 22 sind jeweils mit einem ersten Bowdenzug 24 (gezeigt in Fig. 3) bzw. mit einem zweiten Bowdenzug 26 (gezeigt in Fig. 3) verbunden, welche entlang der jeweiligen rohrförmigen Stabilisierungsstange 02 bis zu deren unteren Ende 04 verlaufen. Die ersten und zweiten Bowdenzüge 24, 26 (gezeigt in Fig. 3) enden jeweils am jeweiligen Antrieb 07. Die Antriebe 07 umfassen jeweils einen dritten Spindelantrieb 27, welcher den jeweiligen ersten Bowdenzug 24 (gezeigt in Fig. 3) mit einer Zugkraft beaufschlagen kann, und einen vierten Spindelantrieb 28 (gezeigt in Fig. 3), welcher den jeweiligen zweiten Bowdenzug 26 (gezeigt in Fig. 3) mit einer Zugkraft beaufschlagen kann.

An den unteren Enden 04 der Stabilisierungsstangen 02 ist weiterhin jeweils eine Steuerungselektronik 29 angebracht, welche zur Steuerung des jeweiligen rotativen Einzelantriebes 17, des jeweiligen ersten Spindelantriebes 18, des jeweiligen zweiten Spindelantriebes 19, des jeweiligen dritten Spindelantriebes 27 und des jeweiligen vierten Spindelantriebes 28 (gezeigt in Fig. 3) dient. Von den Steuerungselektroniken 29 verlaufen jeweils Kabel (nicht gezeigt) durch die jeweilige rohrförmige Stabilisierungsstange 02 bis zu deren oberen Ende 03 und weiter zu dem jeweiligen ersten Spindelantrieb 18 und dem jeweiligen zweiten Spindelantrieb 19.

Die oberen Enden 03 der rohrförmigen Stabilisierungsstangen 02 sind durch eine Querstrebe 31 miteinander verbunden, um die Stabilisierungsstangen 02 gegeneinander zu fixieren.

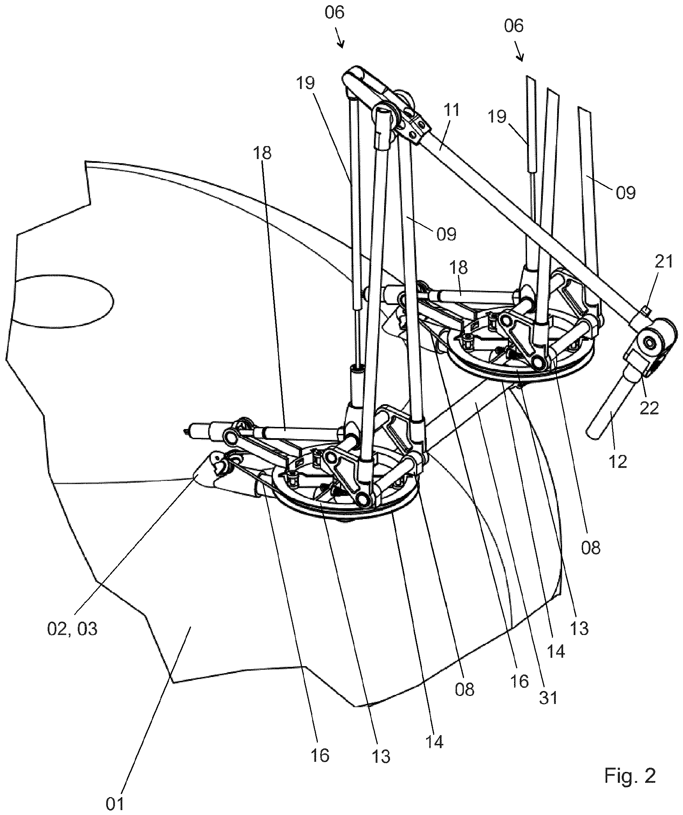

Fig. 2 zeigt die beiden Roboterarme 06 der in Fig. 1 gezeigten Roboteranordnung im Detail. Es sind insbesondere die Schulterarmteile 08, die Oberarmteile 09, die Unterarmteile 11 und die Handwurzelarmteile 12 sowie ersten rotativen Aktuatoren 13, die ersten Spindelantriebe 18 und die zweiten Spindelantriebe 19 dargestellt.

Fig. 3 zeigt die Antriebe 07 der in Fig. 1 gezeigten Roboteranordnung im Detail. Es sind insbesondere die rotativen Einzelantriebe 17, die ersten und zweiten Bowdenzüge 24, 26, die dritten Spindelantriebe 27 und die vierten Spindelantriebe 28 sowie die Steuerungselektroniken 29 dargestellt.

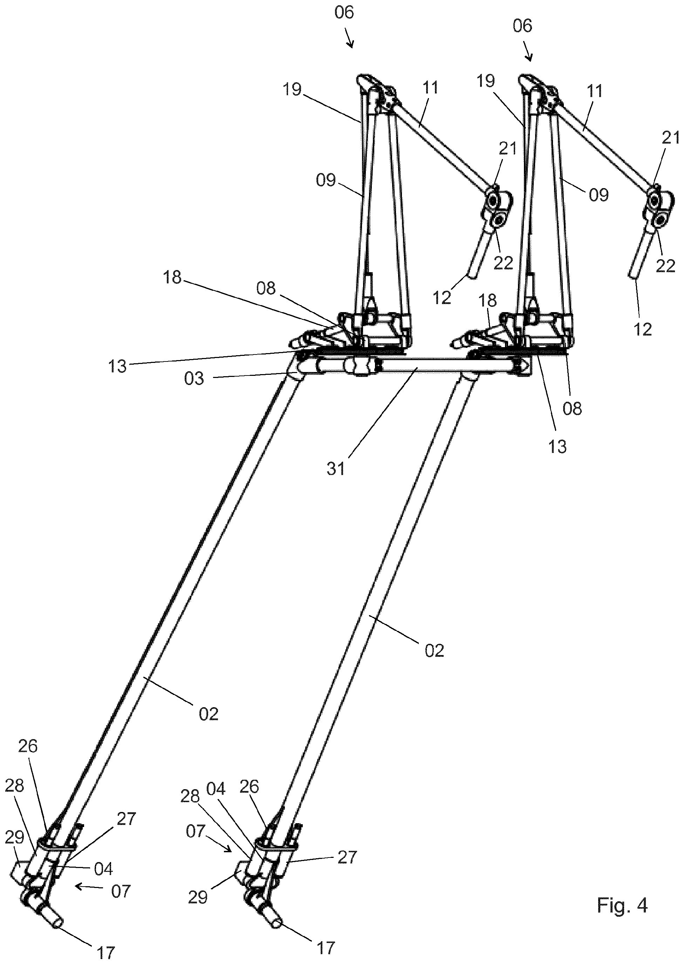

Fig. 4 zeigt die beiden Führungsstangen 02 der in Fig. 1 gezeigten Roboteranordnung mit den an den Führungsstangen 02 befestigten Roboterarmen 06 und den an den Führungsstangen 02 befestigten Antrieben 07. Der Ballon 01 ist in dieser Ansicht nicht dargestellt, sodass die Führungsstangen 02 nicht verdeckt sind.

### Bezugszeichenliste

- 01: Ballon
- 02: Stabilisierungsstange
- 03: oberes Ende
- 04: unteres Ende
- 05: -
- 06: Roboterarm
- 07: Antrieb
- 08: Schulterarmteil
- 09: Oberarmteil
- 10: -
- 11: Unterarmteil
- 12: Handwurzelarmteil
- 13: erster rotativer Aktuator
- 14: Zahnriemenscheibe
- 15: -
- 16: Zahnriemen
- 17: rotativer Einzelantrieb
- 18: erstes Spindelantrieb
- 19: zweiter Spindelantrieb
- 20: -
- 21: zweiter rotativer Aktuator
- 22: dritter rotativer Aktuator
- 23: -
- 24: erster Bowdenzug
- 25: -
- 26: zweiter Bowdenzug
- 27: dritter Spindelantrieb
- 28: vierter Spindelantrieb
- 29: Steuerungselektronik
- 30: -
- 31: Querstrebe

## Patentansprüche

1. Roboteranordnung mit mindestens einem Auftriebskörper (01) zur Befüllung mit einem Gas leichter als Luft und mit zwei durch den Auftriebskörper (01) hindurch verlaufende Stabilisierungsstangen (02), welche jeweils ein erstes Ende (03) und ein zweites Ende (04) aufweisen, wobei an den ersten Enden (03) der Stabilisierungsstangen (02) jeweils ein Roboterarm (06) befestigt ist, und wobei an den zweiten Enden (04) der Stabilisierungsstangen (02) jeweils ein Antrieb (07) für den jeweiligen Roboterarm (06) angebracht ist.

2. Roboteranordnung nach Anspruch 1, **dadurch gekennzeichnet, dass** sich die ersten Enden (03) und die zweiten Enden (04) der Stabilisierungsstangen (02) jeweils außerhalb des Auftriebskörpers (01) befinden, sodass die Stabilisierungsstangen (02) beiderseitig aus dem Auftriebskörper (01) herausragen.

3. Roboteranordnung nach Anspruch 1 oder 2, **dadurch gekennzeichnet, dass** die Stabilisierungsstangen (02) gemeinsam in einer Ebene angeordnet sind, welche auch einen Mittelpunkt des Auftriebskörpers (01) umfasst.

4. Roboteranordnung nach einem Ansprüche 1 bis 3, **dadurch gekennzeichnet, dass** die Stabilisierungsstangen (02) an ihren zweiten Enden (04) einen Abstand zueinander aufweisen, welcher größer als ein Abstand zwischen den ersten Enden (03) der Stabilisierungsstangen (02) ist, sodass die Stabilisierungsstangen (02) V-förmig zueinander ausgerichtet sind.

5. Roboteranordnung nach einem der Ansprüche 1 bis 4, **dadurch gekennzeichnet, dass** in einem schwebenden Zustand der Roboteranordnung die Stabilisierungsstangen (02) schräg durch den Auftriebskörper (01) verlaufen, wobei die Stabilisierungsstangen (02) einen Winkel gegenüber einer Horizontalen aufweisen, welcher zwischen 30° und 60° beträgt.

6. Roboteranordnung nach einem der Ansprüche 1 bis 5, **dadurch gekennzeichnet, dass** die Stabilisierungsstangen (02) an ihren ersten Enden (03) über eine Querstrebe (31) miteinander verbunden sind, welche ein Gelenk umfasst, wodurch der Abstand zwischen den ersten Enden (03) der Stabilisierungsstangen (02) veränderbar ist.

7. Roboteranordnung nach einem der Ansprüche 1 bis 6, **dadurch gekennzeichnet, dass** sie weiterhin Kraft- und/oder Momentübertragungsmittel (24, 26) umfasst, die jeweils von den Antrieben (07) an oder in der jeweiligen Stabilisierungsstange (02) zu dem jeweiligen Roboterarm (06) geführt sind.

8. Roboteranordnung nach Anspruch 7, **dadurch gekennzeichnet, dass** die Kraftübertragungsmittel durch Seilzüge (24, 26) gebildet sind, die in und/oder an den durch Rohre gebildeten Stabilisierungsstangen (02) verlaufen.

9. Roboteranordnung nach einem der Ansprüche 1 bis 8, **dadurch gekennzeichnet, dass** die Antriebe (07) jeweils mindestens drei Einzelantriebe (17, 27, 28) für den jeweiligen Roboterarm (06) umfassen.

10. Roboteranordnung nach einem der Ansprüche 1 bis 9, **dadurch gekennzeichnet, dass** die Roboterarme (06) jeweils einen Schulterarmteil (08), einen vom Schulterarmteil (08) getragenen Oberarmteil (09), einen vom Oberarmteil (09) getragenen Unterarmteil (11) und einen vom Unterarmteil (11) getragenen Handwurzelarmteil (12) umfassen.

11. Roboteranordnung nach Anspruch 10, **dadurch gekennzeichnet, dass** die Roboterarme (06) jeweils einen von einem ersten der Kraft- oder Momentübertragungsmittel antreibbaren ersten rotativen Aktuator (13) umfassen, der auf dem ersten Ende (03) der jeweiligen Stabilisierungsstange (02) angeordnet ist und mit dem jeweiligen Schulterarmteil (08) verbunden ist, wobei die ersten Kraft- oder Momentübertragungsmittel jeweils durch einen ersten der Einzelantriebe (17) des jeweiligen Antriebes (07) antreibbar sind.

12. Roboteranordnung nach Anspruch 10 oder 11, **dadurch gekennzeichnet, dass** die Oberarmteile (09) jeweils schwenkbar am jeweiligen Schulterarmteil (08) angebracht sind, wobei die Roboterarme (06) jeweils einen ersten Linearaktuator (18) umfassen, wobei ein erstes Ende des jeweiligen ersten Linearaktuators (18) mit dem jeweiligen Schulterarmteil (08) verbunden ist, und wobei ein zweites Ende des jeweiligen ersten Linearaktuators (18) mit dem jeweiligen Oberarmteil (09) verbunden ist.

13. Roboteranordnung nach einem der Ansprüche 10 bis 12, **dadurch gekennzeichnet, dass** die Unterarmteile (11) jeweils schwenkbar am jeweiligen Oberarmteil (09) angebracht sind, wobei die Roboterarme (06) jeweils einen zweiten Linearaktuator (19) umfassen, wobei ein erstes Ende des jeweiligen zweiten Linearaktuators (19) mit dem jeweiligen Oberarmteil (09) verbunden ist, und wobei ein zweites Ende des jeweiligen zweiten Linearaktuators (19) mit dem jeweiligen Unterarmteil (11) verbunden ist.

14. Roboteranordnung nach einem der Ansprüche 10 bis 13, **dadurch gekennzeichnet, dass** die Handwurzelarmteile (12) jeweils schwenkbar um eine erste Schwenkachse am jeweiligen Unterarmteil (11) angebracht sind, wobei die Roboterarme (06) jeweils einen von einem zweiten der Kraft- oder Momentübertragungsmittel (24) antreibbaren zweiten rotativen Aktuator (21) umfassen, der an dem jeweiligen Unterarmteil (11) angeordnet ist und mit dem jeweiligen Handwurzelarmteil (12) verbunden ist, wobei die zweiten Kraft- oder Momentübertragungsmittel (24) jeweils durch einen zweiten der Einzelantriebe (27) des jeweiligen Antriebes (07) antreibbar sind.

15. Roboteranordnung nach Anspruch 14, **dadurch gekennzeichnet, dass** die Handwurzelarmteile (12) weiterhin schwenkbar um eine zur ersten Schwenkachse senkrechten zweiten Schwenkachse am jeweiligen Unterarmteil (11) angebracht sind, wobei die Roboterarme (06) jeweils einen von einem dritten der Kraft- oder Momentübertragungsmittel (26) antreibbaren dritten rotativen Aktuator (22) umfassen, der an dem jeweiligen Unterarmteil (11) angeordnet ist und mit dem jeweiligen Handwurzelarmteil (12) verbunden ist, wobei die dritten Kraft- oder Momentübertragungsmittel (26) jeweils durch einen dritten der Einzelantriebe (28) des jeweiligen Antriebes (07) antreibbar sind.

## Claims

1. Robot arrangement having at least one buoyancy body (01) for filling with a gas lighter than air and having two stabilization rods (02) extending through the buoyancy body (01), which respectively have a first end (03) and a second end (04), wherein a robot arm (06) is attached to each of the first ends (03) of the stabilization rods (02), and wherein a drive (07) for the respective robot arm (06) is attached to each of the second ends (04) of the stabilization rods (02) .

2. Robot arrangement according to Claim 1, **characterized in that** the first ends (03) and the second ends (04) of the stabilization rods (02) are respectively located outside of the buoyancy body (01) such that the stabilization rods (02) protrude from the buoyancy body (01) on both sides.

3. Robot arrangement according to Claim 1 or 2, **characterized in that** the stabilization rods (02) are arranged together in a plane, which also comprises a centre point of the buoyancy body (01).

4. Robot arrangement according to one of Claims 1 to 3, **characterized in that** the stabilization rods (02) have a distance from one another at their second ends (04) that is larger than a distance between the first ends (03) of the stabilization rods (02) such that the stabilization rods (02) are aligned in a V-shape with respect to one another.

5. Robot arrangement according to one of Claims 1 to 4, **characterized in that** in a floating state of the robot arrangement, the stabilization rods (02) extend obliquely through the buoyancy body (01), wherein the stabilization rods (02) have an angle with respect to a horizontal line, which is between 30° and 60°.

6. Robot arrangement according to one of Claims 1 to 5, **characterized in that** the stabilization rods (02) are connected to one another at their first ends (03) via a cross-member (31), which comprises a joint, as a result of which the distance between the first ends (03) of the stabilization rods (02) can be altered.

7. Robot arrangement according to one of Claims 1 to 6, **characterized in that** it further comprises force and/or torque transmission means (24, 26), which are respectively guided from the drives (07) on or in the respective stabilization rod (02) to the respective robot arm (06).

8. Robot arrangement according to Claim 7, **characterized in that** the force transmission means are formed by cable pulls (24, 26), which run in and/or on the stabilization rods (02) formed by tubes.

9. Robot arrangement according to one of Claims 1 to 8, **characterized in that** the drives (07) respectively comprise at least three individual drives (17, 27, 28) for the respective robot arm (06).

10. Robot arrangement according to one of Claims 1 to 9, **characterized in that** the robot arms (06) respectively comprise a shoulder arm part (08), an upper arm part (09) supported by the shoulder arm part (08), a lower arm part (11) supported by the upper arm part (09) and a wrist arm part (12) supported by the lower arm part (11) .

11. Robot arrangement according to Claim 10, **characterized in that** the robot arms (06) respectively comprise a first rotary actuator (13) drivable by a first of the force or torque transmission means, which actuator (13) is arranged on the first end (03) of the respective stabilization rod (02) and is connected to the respective shoulder arm part (08), wherein the first force or torque transmission means can be respectively driven by a first of the individual drives (17) of the respective drive (07).

12. Robot arrangement according to Claim 10 or 11, **characterized in that** the upper arm parts (09) are respectively pivotally attached to the respective shoulder arm part (08), wherein the robot arms (06) respectively comprise a first linear actuator (18), wherein a first end of the respective first linear actuator (18) is connected to the respective shoulder arm part (08), and wherein a second end of the respective first linear actuator (18) is connected to the respective upper arm part (09).

13. Robot arrangement according to one of Claims 10 to 12, **characterized in that** the lower arm parts (11) are respectively pivotally attached to the respective upper arm part (09), wherein the robot arms (06) respectively comprise a second linear actuator (19), wherein a first end of the respective second linear actuator (19) is connected to the respective upper arm part (09), and wherein a second end of the respective second linear actuator (19) is connected to the respective lower arm part (11).

14. Robot arrangement according to one of Claims 10 to 13, **characterized in that** the wrist arm parts (12) are each attached to the respective lower arm part (11) such that they can be pivoted about a first pivot axis, wherein the robot arms (06) respectively comprise a second rotary actuator (21) drivable by a second of the force or torque transmission means (24), which actuator (21) is arranged on the respective lower arm part (11) and is connected to the respective wrist arm part (12), wherein the second force or torque transmission means (24) can be respectively driven by a second of the individual drives (27) of the respective drive (07).

15. Robot arrangement according to Claim 14, **characterized in that** the wrist arm parts (12) are furthermore attached to the respective lower arm part (11) such that they can be pivoted about a second pivot axis perpendicular to the first pivot axis, wherein the robot arms (06) respectively comprise a third rotary actuator (22) drivable by a third of the force or torque transmission means (26), which actuator (22) is arranged on the respective lower arm part (11) and is connected to the respective wrist arm part (12), wherein the third force or torque transmission means (26) can be respectively driven by a third of the individual drives (28) of the respective drive (07).

## Revendications

1. Agencement de robot comprenant au moins un corps de poussée verticale (01) destiné à être rempli d'un gaz plus léger que l'air et comprenant deux barres stabilisatrices (02) passant au travers du corps de poussée verticale (01), lesquelles présentent respectivement une première extrémité (03) et une seconde extrémité (04), dans lequel un bras de robot (06) est fixé respectivement aux premières extrémités (03) des barres stabilisatrices (02), et dans lequel respectivement un entraînement (07) pour le bras de robot (06) respectif est placé aux secondes extrémités (04) des barres stabilisatrices (02).

2. Agencement de robot selon la revendication 1, **caractérisé en ce que** les premières extrémités (03) et les secondes extrémités (04) des barres stabilisatrices (02) se trouvent respectivement endehors du corps de poussée verticale (01), de sorte que les barres stabilisatrices (02) font saillie des deux côtés du corps de poussée verticale (01).

3. Agencement de robot selon la revendication 1 ou 2, **caractérisé en ce que** les barres stabilisatrices (02) sont disposées ensemble dans un plan qui comprend également un point médian du corps de poussée verticale (01).

4. Agencement de robot selon l'une des revendications 1 à 3, **caractérisé en ce que** les barres stabilisatrices (02) présentent un écart entre elles sur leurs secondes extrémités (04) qui est plus grand qu'un écart entre les premières extrémités (03) des barres stabilisatrices (02), de sorte que les barres stabilisatrices (02) sont alignées entre elles en formant un V.

5. Agencement de robot selon l'une des revendications 1 à 4, **caractérisé en ce que** dans un état de flottaison de l'agencement de robot, les barres stabilisatrices (02) passent de manière oblique à travers le corps de poussée verticale (01), dans lequel les barres stabilisatrices (02) présentent un angle par rapport à une horizontale qui fait entre 30° et 60°.

6. Agencement de robot selon l'une des revendications 1 à 5, **caractérisé en ce que** les barres stabilisatrices (02) sont reliées entre elles à leurs premières extrémités (03) par une traverse (31), laquelle comprend une articulation, ce par quoi l'écart entre les premières extrémités (03) des barres stabilisatrices (02) peut être modifié.

7. Agencement de robot selon l'une des revendications 1 à 6, **caractérisé en ce qu'**il comprend en outre des moyens de transmission de couple ou de force (24, 26) qui sont respectivement dirigés par les entraînements (07) contre ou dans la barre stabilisatrice (02) respective vers le bras de robot (06) respectif.

8. Agencement de robot selon la revendication 7, **caractérisé en ce que** les moyens de transmission de force sont formés par des tirants à câbles (24, 26) qui passent dans et/ou contre les barres stabilisatrices (02) formées par des tubes.

9. Agencement de robot selon l'une des revendications 1 à 8, **caractérisé en ce que** les entraînements (07) comprennent respectivement au moins trois entraînements individuels (17, 27, 28) pour le bras de robot (06) respectif.

10. Agencement de robot selon l'une des revendications 1 à 9, **caractérisé en ce que** les bras de robot (06) comprennent respectivement une partie bras-épaule (08), une partie de bras (09) portée par la partie bras-épaule (08), une partie d'avant-bras (11) portée par la partie de bras (09) et une partie de bras-carpe (12) portée par la partie d'avant-bras (11).

11. Agencement de robot selon la revendication 10, **caractérisé en ce que** les bras de robot (06) comprennent un premier actionneur rotatif (13) pouvant être entraîné par un premier des moyens de transmission de couple ou de force qui est disposé sur la première extrémité (03) de la barre stabilisatrice (02) respective et est relié à la partie bras-épaule (08) respective, dans lequel les premiers moyens de transmission de couple ou de force peuvent être entraînés respectivement par un premier des différents entraînements (17) de l'entraînement (07) respectif.

12. Agencement de robot selon la revendication 10 ou 11, **caractérisé en ce que** les parties de bras (09) sont placées respectivement pivotantes sur la partie bras-épaule (08) respective, dans lequel les bras de robot (06) comprennent respectivement un premier actionneur linéaire (18), dans lequel une première extrémité du premier actionneur linéaire (18) respectif est reliée à la partie bras-épaule (08) respective, et dans lequel une seconde extrémité du premier actionneur linéaire (18) respectif est reliée à la partie de bras (09) respective.

13. Agencement de robot selon l'une des revendications 10 à 12, **caractérisé en ce que** les parties d'avant-bras (11) sont placées respectivement pivotantes sur la partie de bras (09) respective, dans lequel les bras de robot (06) comprennent respectivement un second actionneur linéaire (19), dans lequel une première extrémité du second actionneur linéaire (19) est reliée à la partie de bras (09) respective, et dans lequel une seconde extrémité du second actionneur linéaire (19) respectif est reliée à la partie d'avant-bras (11) respective.

14. Agencement de robot selon l'une des revendications 10 à 13, **caractérisé en ce que** les parties de bras-carpe (12) sont placées respectivement pivotantes sur un premier pivot sur la partie d'avant-bras (11) respective, dans lequel les bras de robot (06) comprennent respectivement un deuxième actionneur rotatif (21) pouvant être entraîné par un second des moyens de transmission de force et de couple (24) qui est disposé sur la partie d'avant-bras (11) respective et est relié à la partie de bras-carpe (12) respective, dans lequel les seconds moyens de transmission de force et de couple (24) peuvent être entraînés respectivement par un deuxième des entraînements individuels (27) de l'entraînement (07) respectif.

15. Agencement de robot selon la revendication 14, **caractérisé en ce que** les parties de bras-carpe (12) sont en outre placées respectivement pivotantes sur un second pivot vertical au premier pivot, sur la partie d'avant-bras (11) respective, dans lequel les bras de robot (06) comprennent respectivement un troisième actionneur rotatif (22) pouvant être entraîné par un troisième des moyens de transmission de force et de couple (26), qui est disposé sur la partie d'avantbras (11) respective et est relié à la partie de bras-carpe (12) respective, dans lequel les troisièmes moyens de transmission de force et de couple (26) peuvent être entraînés respectivement par un troisième des entraînements individuels (28) de l'entraînement (07) respectif.
